# EUROPEAN PATENT SPECIFICATION

(11) **EP 3 794 235 B1**
(45) Date of publication and mention of the grant of the patent: **01.03.2023**
(21) Application number: 19734302.3
(22) Date of filing: 18.06.2019
(51) Int. Cl.: F03D 80/50, F03D 7/02

(54) **SAFETY DEVICE AND METHOD FOR A WIND TURBINE**
SICHERHEITSVORRICHTUNG UND VERFAHREN FÜR EINE WINDTURBINE
DISPOSITIF ET PROCÉDÉ DE SÉCURITÉ POUR ÉOLIENNE

(30) Priority: 25.06.2018 EP 18179553
(43) Date of publication of application: 24.03.2021
(73) Proprietor: Siemens Gamesa Renewable Energy A/S, 7330 Brande (DK)
(72) Inventor: SCHMIDT, Soeren Adrian, 7000 Vejle (DK)
(74) Representative: SGRE-Association
(86) International application number: PCT/EP2019/065932
(87) International publication number: WO 2020/002034

(56) References cited:
- CN-B- 102 748 215
- CN-B- 103 557 116
- US-A1- 2010 013 227

## Description

### Field of Invention

The present invention relates to the field of wind turbines, in particular to a safety device for switching a wind turbine between a safe mode of operation and a normal mode of operation. The present invention further relates to a wind turbine comprising a safety device, a wind farm comprising a plurality of wind turbines, a method of switching a wind turbine between a safe mode of operation and a normal mode of operation, and a computer program.

### Art Background

When a technician enters a wind turbine, care must be taken that the wind turbine does not operate in a way that exposes the technician to danger. A dangerous situation could for example occur if a wind farm controller erroneously sets the wind turbine to operate at full (rated) power while the technician is working on the turbine.

Accordingly, there may be a need for a 100% reliable way of setting a wind turbine to operate in a safe mode while the technician is working. Documents CN 102 748 215 B, CN 103 557 116 B and US 2010/013227 A1 show safety circuits for wind turbines.

### Summary of the Invention

This need may be met by the subject matter according to the independent claims. Advantageous embodiments of the present invention are described by the dependent claims.

According to a first aspect of the invention, there is provided a safety device for switching a wind turbine between a safe mode of operation and a normal mode of operation. The safety device comprises (a) a controller comprising a first pair of terminals, a second pair of terminals, and control logic, the control logic being adapted to generate an output signal indicative of either the safe mode of operation or the normal mode of operation, and (b) a switching assembly operable to select one of the normal mode of operation and the safe mode of operation, the switching assembly comprising a first switch and a second switch adapted to operate synchronously, wherein the first switch is adapted to selectively connect and disconnect the first pair of terminals, and wherein the second switch is adapted to selectively connect and disconnect the second pair of terminals. Furthermore, the control logic is adapted to generate the output signal indicative of the normal mode of operation when both the first pair of terminals and the second pair of terminals are respectively connected, and to generate the output signal indicative of the safe mode of operation when at least one of the first pair of terminals and the second pair of terminals are not respectively connected.

This aspect of the invention is based on the idea that the output signal only indicates the normal mode of operation when both pairs of terminals are respectively connected, i.e. when the terminals of the first pair of terminals are connected and the terminals of the second pair of terminals are connected. In all other situations, i.e. when only the terminals of one of the (first and second) pairs of terminals are connected or when the terminals of neither the first nor the second pair of terminals are connected, the output signal will indicate the safe mode of operation. Thereby, even if an error or failure occurs in the switching assembly or in cables connecting the terminals and the switching assembly after the switching assembly has been operated to select the safe mode of operation, the output signal will still indicate the safe mode of operation.

In the present context, the term "a first switch and a second switch adapted to operate synchronously" may in particular denote that when the first switch is closed, also the second switch will be closed, and vice versa. In other words, the first and second switches are linked to always be in the same state (closed or open).

According to the invention, the controller further comprises (a) a first signal generator connected to one of the first pair of terminals and adapted to generate a first characteristic signal, (b) a first signal detector connected the other one of the first pair of terminals and adapted to detect the first characteristic signal, (c) a second signal generator connected to one of the second pair of terminals and adapted to generate a second characteristic signal, and (d) a second signal detector connected to the other one of the second pair of terminals and adapted to detect the second characteristic signal. Furthermore, the control logic is adapted to determine that the first pair of terminals are connected when the first signal detector detects the first characteristic signal and determine that the second pair of terminals are connected when the second signal detector detects the second characteristic signal.

In this embodiment, the first signal generator generates a first characteristic signal and outputs it via one terminal of the first pair of terminals. The first signal detector is connected to the other terminal of the first pair of terminals and capable of detecting the first characteristic signal. Only if the first signal detector detects the first characteristic signal, the control logic determines that the terminals of the first pair of terminals are connected. Similarly, the second signal generator generates a second characteristic signal and outputs it via one terminal of the second pair of terminals. The second signal detector is connected to the other terminal of the second pair of terminals and capable of detecting the second characteristic signal. Only if the second signal detector detects the second characteristic signal, the control logic determines that the terminals of the second pair of terminals are connected.

By requiring that the first characteristic signal, which is output at one of the terminals of the first pair of terminals, is also received at the other terminal of the first pair of terminals, and similarly that the second characteristic signal, which is output at one of the terminals of the second pair of terminals, is also received at the other terminal of the second pair of terminals, safety and robustness is further improved. In particular, a situation where some of the terminals of different pairs of terminals are connected due to an error, such as defective insulation material or an error in the switching assembly, will not lead to an output signal from the control logic indicating the safe mode of operation.

According to the invention, the first characteristic signal is a pulsed signal having a first frequency and the second characteristic signal is a pulsed signal having a second frequency.

Pulsed signals are easy to generate and detect by standard electronic components and thus present a cheap and effective means of improving safety.

According to the invention, the first frequency differs from the second frequency.

Alternatively or additionally, the first characteristic signal may also have a duty cycle which is different from the duty cycle of the second characteristic signal.

According to a further embodiment of the invention, the controller is a safety PLC, i.e. a programmable logic controller dedicated to safety systems.

This embodiment is particularly advantageous in cases where the wind turbine already comprises a safety PLC, such that the present invention may be implemented by corresponding programming of the safety PLC.

According to a further embodiment of the invention, the control logic comprises a first relay and a second relay arranged in series between a voltage source and an output terminal, wherein the first relay is adapted to close and the second relay is adapted to close when the first pair of terminals are connected and the second pair of terminals are connected.

When both relays are closed (corresponding to the normal mode of operation), they will form a connection between the voltage source and the output terminal. In all other situations (i.e. one or two open relays, corresponding to the safe mode of operation), the output terminal will not be connected to the voltage source. Thus, in this embodiment the output signal equals the voltage of the voltage source when indicating normal mode of operation.

According to a further embodiment of the invention, the first relay comprises a first auxiliary relay adapted to indicate the state of the first relay, the second relay comprises a second auxiliary relay adapted to indicate the state of the second relay, and the first auxiliary relay and the second auxiliary relay are connected in series to form a feedback circuit.

The auxiliary relays mirror the state of the respective relay and thereby the feedback circuit makes it possible for the controller to verify that the respective states of the relays correspond to the detections of respective connections between the terminals of the first and second pairs of terminals. If the verification fails, e.g. if one of the first and second relays is unable to open, an error signal may be output from the controller.

According to a second aspect of the invention, there is provided a wind turbine comprising (a) a wind turbine generator, (b) a wind turbine controller, and (c) a safety device according to the first aspect or any of the above embodiments, wherein the wind turbine is communicatively coupled to receive the output signal from the safety device and adapted to operate the wind turbine generator in either a safe mode of operation or a normal mode of operation in dependency of the output signal.

The wind turbine according to this aspect of the invention is based on and profits from the same idea as the first aspect of the invention, which has been discussed in detail above.

According to an embodiment of the invention, the wind turbine controller is responsive to local input only when operating in the safe mode of operation, and the wind turbine controller is responsive to both local and remote input when operating in the normal mode of operation.

Thus, when operating in the safe mode of operation, the wind turbine controller does not respond to external input (such as set points or other commands from a central wind farm controller) but can only be influenced by local input, in particular settings input by a technician during maintenance.

According to a third aspect of the invention, there is provided a wind farm comprising a plurality of wind turbine according to the second aspect or any of the above embodiments.

According to a fourth aspect of the invention, there is provided a method of switching a wind turbine between a safe mode of operation and a normal mode of operation. The method comprises (a) determining whether a first pair of terminals are connected, (b) determining whether a second pair of terminals are connected, (c) generating an output signal indicative of the normal mode of operation when it is determined that both the first pair of terminals and the second pair of terminals are respectively connected, and (d) generating an output signal indicative of the safe mode of operation when it is determined that at least one of the first pair of terminals and the second pair of terminals are not respectively connected.

This aspect of the invention is based on the same idea as the first aspect described above.

According to a fifth aspect of the invention, there is provided a computer program comprising computer executable instructions which, when executed by a computer processing device, are adapted to perform the steps of the method according to the fourth aspect.

It is noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless otherwise indicated, in addition to any combination of features belonging to one type of subject matter also any combination of features relating to different subject matters, in particular to combinations of features of the method type claims and features of the apparatus type claims, is part of the disclosure of this document.

The aspects defined above and further aspects of the present invention are apparent from the examples of embodiments to be described hereinafter and are explained with reference to the examples of embodiments. The invention will be described in more detail hereinafter with reference to examples of embodiments. However, it is explicitly noted that the invention is not limited to the described exemplary embodiments.

### Brief Description of the Drawing

Figure 1 shows a safety device for switching a wind turbine between a safe mode of operation and a normal mode of operation in accordance with an embodiment of the present invention.
Figure 2 shows a safety device for switching a wind turbine between a safe mode of operation and a normal mode of operation in accordance with a further embodiment of the present invention.

### Detailed Description

The illustration in the drawing is schematic. It is noted that in different figures, similar or identical elements are provided with the same reference numerals or with reference numerals which differ only within the first digit.

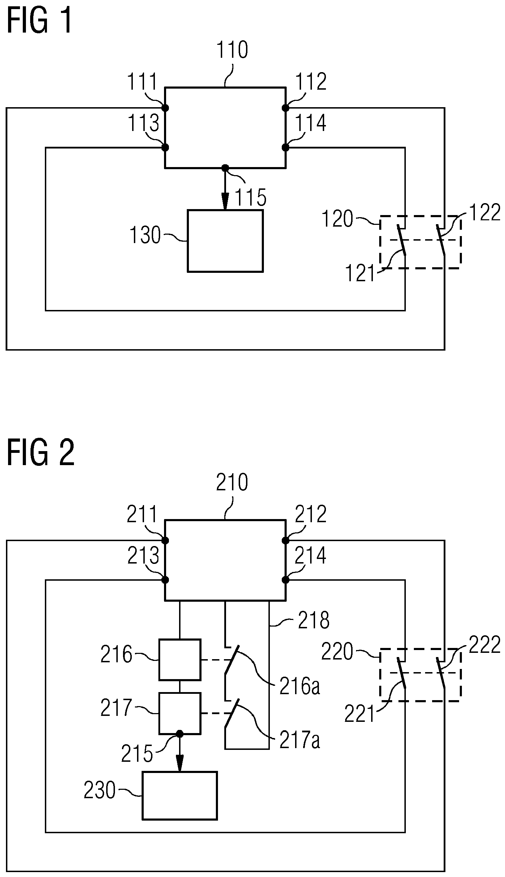

Figure 1 shows a safety device 100 for switching a wind turbine between a safe mode of operation (i.e. a mode of operation where a technician can safely perform service and maintenance work on the wind turbine without the risk of the wind turbine suddenly changing its mode of operation in response to an external control signal or message) and a normal mode of operation (i.e. a power producing mode) in accordance with an embodiment of the present invention. The safety device 100 comprises a controller 110 and a switching assembly 120.

The controller 110 is preferably implemented as a safety PLC (i.e. a programmable logic controller dedicated to safety systems) and comprises a first pair of terminals 111, 112, a second pair of terminals 113, 114, and control logic (not shown) for generating an output signal indicative of either the safe mode of operation or the normal mode of operation and supplying the output signal to output terminal 115.

The switching assembly 120 is operable to select one of the normal mode and the safe mode of operation, i.e. the switching assembly can be operated by a technician when arriving at the wind turbine to initiate service or maintenance work or when leaving the wind turbine after having performed such work. The switching assembly 120 comprises a first switch 121 arranged to close or break an electrical connection between the terminals 111 and 112 of the first pair of terminals, and a second switch 122 arranged to close or break an electrical connection between the terminals 113 and 114 of the second pair of terminals. The first switch 121 and the second switch 122 are linked to operate synchronously in the sense that they are both either closes or open.

The control logic of the controller 110 is adapted to determine whether the terminals 111 and 112 of the first pair of terminals are connected or not and whether the terminals 113 and 114 of the second pair of terminals are connected or not. When the control logic determines that the terminals 111, 112 and 113, 114 of both pairs are respectively connected, it sets the output signal supplied to the output terminal 115 to indicate the normal mode of operation, e.g. by outputting a digital high value. On the other hand, when the control logic determines that the terminals of at least one of the pairs of terminals are not connected, i.e. when the terminals 111 and 112 are not connected and/or the terminals 113 and 114 are not connected, it sets the output signal supplied to the output signal 115 to indicate the safe mode of operation, e.g. by outputting a digital low value. The output signal is supplied from the output terminal 115 to a wind turbine controller 130 which controls the mode of operation of a corresponding wind turbine (not shown).

The controller preferably comprises a first signal generator, a first signal detector, a second signal generator, and a second signal detector (not shown). These signal generators and detectors are typically available on a safety PLC and therefore merely need to be set up.

The first signal generator is adapted to generate a first characteristic signal, such as a pulsed signal with a predetermined first frequency and feed it to terminal 112. The first signal detector is coupled to the terminal 111 and adapted to detect the first characteristic signal in case this arrives at the terminal 111. Similarly, the second signal generator is adapted to generate a second characteristic signal, such as a pulsed signal with a predetermined second frequency and feed it to terminal 114. The second signal detector is coupled to the terminal 113 and adapted to detect the second characteristic signal in case this arrives at the terminal 113. The pulsed signals may be square wave signals with 50:50 duty cycle. Alternatively, the first characteristic signal may have a duty cycle that differs from the duty cycle of the second characteristic signal.

The control logic now determines that the terminals 111 and 112 of the first set of terminals are connected when the first signal detector detects the first characteristic signal. Similarly, the control logic determines that the terminals 113 and 114 of the second pair of terminals are connected when the second signal detector detects the second characteristic signal. In other words, a connection between terminal 111 and both terminals 113 and 114 (e.g. due to an error in the switching assembly 120 or due to faulty isolation of the cables connecting the terminals 111, 112, 113, 114 and the switching assembly 120) will cause the control logic to determine that the terminals 111 and 112 are connected and that the terminals 113 and 114 are not connected.

One of the strengths of the safety device 100 is that it only outputs the output signal indicating the normal mode of operation when both switches 121 and 122 are closed and all parts of the device are operating correctly. If one of the switches 121, 122 or one or more of the signal generators and detectors of the controller 110 malfunctions, it will automatically result in an output signal indicating the safe mode of operation. Thus, if such malfunction occurs while the technician is working on the wind turbine, the wind turbine will continue operating in the safe mode of operation.

Figure 2 shows a safety device 200 for switching a wind turbine between a safe mode of operation and a normal mode of operation in accordance with a further embodiment of the present invention. More specifically, the controller 210 in this embodiment is not a readily available safety PLC but a dedicated electronic unit designed to perform the same functions as discussed above in conjunction with Figure 1. That is, the controller 210 comprises a first signal generator coupled to terminal 212, a first signal detector coupled to terminal 211, a second signal detector coupled to terminal 214, and a second signal detector coupled to terminal 213. The switching assembly 220 is similar to the switching assembly 120 described above in conjunction with Figure 1.

In this embodiment, the control logic is constituted by a first relay 216 and a second relay 217 arranged in series between a voltage source (providing a voltage corresponding to a digital high value) within the controller 210 and output terminal 215 such that when both relays 216 and 217 are closed, the voltage at the output terminal corresponds to that of the voltage source. When the first signal detector detects the first characteristic signal at terminal 211 and the second signal detector detects the second characteristic signal at terminal 213, the first relay 216 is closed and the second relay 217 is closed.

A further feature of this embodiment is that the first relay 216 comprises a first auxiliary relay 216a and the second relay comprises a second auxiliary relay 217a. The first auxiliary relay mirrors the actual state (opened or closed) of the first relay 216 and the second auxiliary relay 217a mirrors the actual state of the second auxiliary relay 217. The auxiliary relays are arranged in series to form feedback loop 218 which allows the controller 210 to monitor whether the actual state of the relays 216 and 217 corresponds to the desired state, i.e. to the detection results of the first and second signal detectors. If this is not the case, the controller 210 outputs a corresponding error signal (not shown) indicating that one of the relays 216 and 217 is defective.

Due to the absence of a safety PLC, the present embodiment requires some dedicated hardware and corresponding physical installation of the same. However, neither the cost nor the effort is high in consideration of the obtained benefits of being able to safely switch a wind turbine into the safe mode of operation during maintenance and repair work.

It is noted that the term "comprising" does not exclude other elements or steps and the use of the articles "a" or "an" does not exclude a plurality. Also elements described in association with different embodiments may be combined. It is further noted that reference signs in the claims are not to be construed as limiting the scope of the claims.

## Claims

1. A safety device for switching a wind turbine between a safe mode of operation and a normal mode of operation, the safety device comprising
a controller (110, 210) comprising a first pair of terminals (111, 112; 211, 212), a second pair of terminals (113, 114; 213, 214), and control logic, the control logic being adapted to generate an output signal indicative of either the safe mode of operation or the normal mode of operation, and
a switching assembly (120, 220) operable to select one of the normal mode of operation and the safe mode of operation, the switching assembly comprising a first switch (121, 221) and a second switch (122, 222) adapted to operate synchronously, wherein the first switch is adapted to selectively connect and disconnect the first pair of terminals, and wherein the second switch is adapted to selectively connect and disconnect the second pair of terminals,
wherein the control logic is adapted to generate the output signal indicative of the normal mode of operation when both the first pair of terminals and the second pair of terminals are respectively connected, and to generate the output signal indicative of the safe mode of operation when at least one of the first pair of terminals and the second pair of terminals are not respectively connected,
wherein the controller further comprises
a first signal generator connected to one of the first pair of terminals and adapted to generate a first characteristic signal, the first characteristic signal being a pulsed signal having a first frequency and a first duty cycle,
a first signal detector connected to the other one of the first pair of terminals and adapted to detect the first characteristic signal,
a second signal generator connected to one of the second pair of terminals and adapted to generate a second characteristic signal, the second characteristic signal being a pulsed signal having a second frequency and a second duty cycle, and
a second signal detector connected to the other one of the second pair of terminals and adapted to detect the second characteristic signal,
wherein the control logic is adapted to determine that the first pair of terminals are connected when the first signal detector detects the first characteristic signal and determine that the second pair of terminals are connected when the second signal detector detects the second characteristic signal, and
wherein the first frequency differs from the second frequency and/or the first duty cycle differs from the second duty cycle.

2. The safety device according to the preceding claim, wherein the controller is a safety PLC (110).

3. The safety device according to claim 1, wherein the control logic comprises a first relay (216) and a second relay (217) arranged in series between a voltage source and an output terminal (215), wherein the first relay is adapted to close and the second relay is adapted to close when the first pair of terminals are connected and the second pair of terminals are connected.

4. The safety device according to the preceding claim, wherein the first relay comprises a first auxiliary relay (216a) adapted to indicate the state of the first relay, wherein the second relay comprises a second auxiliary relay (217a) adapted to indicate the state of the second relay, and wherein the first auxiliary relay and the second auxiliary relay are connected in series to form a feedback circuit (218).

5. A wind turbine comprising
a wind turbine generator,
a wind turbine controller, and
a safety device according to any of the preceding claims,
wherein the wind turbine is communicatively coupled to receive the output signal from the safety device and adapted to operate the wind turbine generator in either a safe mode of operation or a normal mode of operation in dependency of the output signal.

6. The wind turbine according to the preceding claim, wherein the wind turbine controller is responsive to local input only when operating in the safe mode of operation, and wherein the wind turbine controller is responsive to both local and remote input when operating in the normal mode of operation.

7. A wind farm comprising a plurality of wind turbines according to claim 5 or 6.

8. A method of switching a wind turbine between a safe mode of operation and a normal mode of operation, the method comprising
determining whether a first pair of terminals are connected,
determining whether a second pair of terminals are connected,
generating an output signal indicative of the normal mode of operation when it is determined that both the first pair of terminals and the second pair of terminals are respectively connected, and
generating an output signal indicative of the safe mode of operation when it is determined that at least one of the first pair of terminals and the second pair of terminals are not respectively connected,
wherein a first signal generator is connected to one of the first pair of terminals and adapted to generate a first characteristic signal, the first characteristic signal being a pulsed signal having a first frequency and a first duty cycle,
wherein a first signal detector is connected to the other one of the first pair of terminals and adapted to detect the first characteristic signal,
wherein a second signal generator is connected to one of the second pair of terminals and adapted to generate a second characteristic signal, the second characteristic signal being a pulsed signal having a second frequency and a second duty cycle,
wherein a second signal detector is connected to the other one of the second pair of terminals and adapted to detect the second characteristic signal,
wherein it is determined that the first pair of terminals are connected when the first signal detector detects the first characteristic signal and it is determined that the second pair of terminals are connected when the second signal detector detects the second characteristic signal, and
wherein the first frequency differs from the second frequency and/or the first duty cycle differs from the second duty cycle.

9. A computer program comprising computer executable instructions which, when executed by a computer processing device, are adapted to perform the steps of the method according to the preceding claim.

## Patentansprüche

1. Sicherheitsvorrichtung zum Umschalten einer Windturbine zwischen einem sicheren Betriebsmodus und einem normalen Betriebsmodus, wobei die Sicherheitsvorrichtung Folgendes umfasst:
einen Controller (110, 210), der ein erstes Paar von Anschlüssen (111, 112; 211, 212), ein zweites Paar von Anschlüssen (113, 114; 213, 214) und eine Steuerlogik umfasst, wobei die Steuerlogik ausgelegt ist, um ein Ausgangssignal zu erzeugen, das entweder den sicheren Betriebsmodus oder den normalen Betriebsmodus anzeigt, und
eine Schaltbaugruppe (120, 220), die betriebsfähig ist, um entweder den normalen Betriebsmodus oder den sicheren Betriebsmodus auszuwählen, wobei die Schaltbaugruppe einen ersten Schalter (121, 221) und einen zweiten Schalter (122, 222) umfasst, die ausgelegt sind, um synchron zu arbeiten, wobei der erste Schalter so ausgelegt ist, dass er das erste Paar von Anschlüssen selektiv verbindet und trennt, und
wobei der zweite Schalter so ausgelegt ist, dass er das zweite Paar von Anschlüssen selektiv verbindet und trennt,
wobei die Steuerlogik ausgelegt ist, um das Ausgangssignal zu erzeugen, das den normalen Betriebsmodus anzeigt, wenn sowohl das erste Paar von Anschlüssen als auch das zweite Paar von Anschlüssen jeweils verbunden ist, und um das Ausgangssignal zu erzeugen, das den sicheren Betriebsmodus anzeigt, wenn mindestens eines von dem ersten Paar von Anschlüssen und dem zweiten Paar von Anschlüssen jeweils nicht verbunden ist,
wobei der Controller ferner Folgendes umfasst:
einen ersten Signalgenerator, der mit einem des ersten Paars von Anschlüssen verbunden ist und dazu ausgelegt ist, ein erstes charakteristisches Signal zu erzeugen, wobei das erste charakteristische Signal ein gepulstes Signal mit einer ersten Frequenz und einem ersten Tastverhältnis ist,
einen ersten Signaldetektor, der mit dem anderen des ersten Paars von Anschlüssen verbunden ist und dazu ausgelegt ist, das erste charakteristische Signal zu erfassen,
einen zweiten Signalgenerator, der mit einem des zweiten Paars von Anschlüssen verbunden ist und dazu ausgelegt ist, ein zweites charakteristisches Signal zu erzeugen, wobei das zweite charakteristische Signal ein gepulstes Signal mit einer zweiten Frequenz und einem zweiten Tastverhältnis ist, und
einen zweiten Signaldetektor, der mit dem anderen des zweiten Paars von Anschlüssen verbunden ist und dazu ausgelegt ist, das zweite charakteristische Signal zu erfassen,
wobei die Steuerlogik dazu ausgelegt ist festzustellen, dass das erste Paar von Anschlüssen verbunden ist, wenn der erste Signaldetektor das erste charakteristische Signal erfasst, und festzustellen, dass das zweite Paar von Anschlüssen verbunden ist, wenn der zweite Signaldetektor das zweite charakteristische Signal erfasst, und
wobei sich die erste Frequenz von der zweiten Frequenz und/oder das erste Tastverhältnis von dem zweiten Tastverhältnis unterscheidet.

2. Sicherheitsvorrichtung nach dem vorhergehenden Anspruch, wobei der Controller eine Sicherheits-SPS (110) ist.

3. Sicherheitsvorrichtung nach Anspruch 1,
wobei die Steuerlogik ein erstes Relais (216) und ein zweites Relais (217) umfasst, die in Reihe zwischen einer Spannungsquelle und einem Ausgangsanschluss (215) angeordnet sind,
wobei das erste Relais so ausgelegt ist, dass es schließt, wenn das erste Paar von Anschlüssen verbunden ist, und das zweite Relais so ausgelegt ist, dass es schließt, wenn das zweite Paar von Anschlüssen verbunden ist.

4. Sicherheitsvorrichtung nach dem vorhergehenden Anspruch,
wobei das erste Relais ein erstes Hilfsrelais (216a) umfasst, das dazu ausgelegt ist, den Zustand des ersten Relais anzuzeigen,
wobei das zweite Relais ein zweites Hilfsrelais (217a) umfasst, das dazu ausgelegt ist, den Zustand des zweiten Relais anzuzeigen, und
wobei das erste Hilfsrelais und das zweite Hilfsrelais in Reihe geschaltet sind, um eine Rückkopplungsschaltung (218) zu bilden.

5. Windturbine, die Folgendes umfasst:
einen Windturbinengenerator,
einen Windturbinencontroller, und
eine Sicherheitsvorrichtung nach einem der vorhergehenden Ansprüche,
wobei die Windturbine kommunikativ gekoppelt ist, um das Ausgangssignal von der Sicherheitsvorrichtung zu empfangen, und dazu ausgelegt ist, den Windturbinengenerator in Abhängigkeit von dem Ausgangssignal entweder in einem sicheren Betriebsmodus oder in einem normalen Betriebsmodus zu betreiben.

6. Windturbine nach dem vorhergehenden Anspruch,
wobei der Windturbinencontroller nur dann auf lokale Eingaben reagiert, wenn er in der sicheren Betriebsart arbeitet, und
wobei der Windturbinencontroller sowohl auf lokale als auch auf entfernte Eingaben reagiert, wenn er in der normalen Betriebsart arbeitet.

7. Windfarm, die eine Vielzahl von Windturbinen nach Anspruch 5 oder 6 umfasst.

8. Verfahren zum Umschalten einer Windturbine zwischen einem sicheren Betriebsmodus und einem normalen Betriebsmodus, wobei das Verfahren Folgendes umfasst:
Feststellen, ob ein erstes Paar von Anschlüssen verbunden ist, Feststellen, ob ein zweites Paar von Anschlüssen verbunden ist,
Erzeugen eines Ausgangssignals, das den normalen Betriebsmodus anzeigt, wenn festgestellt wird, dass sowohl das erste Paar von Anschlüssen als auch das zweite Paar von Anschlüssen jeweils verbunden ist, und
Erzeugen eines Ausgangssignals, das den sicheren Betriebsmodus anzeigt, wenn festgestellt wird, dass mindestens eines des ersten Paars von Anschlüssen und des zweiten Paars von Anschlüssen jeweils nicht verbunden ist,
wobei ein erster Signalgenerator mit einem des ersten Paars von Anschlüssen verbunden ist und dazu ausgelegt ist, ein erstes charakteristisches Signal zu erzeugen, wobei das erste charakteristische Signal ein gepulstes Signal mit einer ersten Frequenz und einem ersten Tastverhältnis ist,
wobei ein erster Signaldetektor mit dem anderen des ersten Paars von Anschlüssen verbunden ist und dazu ausgelegt ist,
das erste charakteristische Signal zu erfassen,
wobei ein zweiter Signalgenerator mit einem des zweiten Paars von Anschlüssen verbunden ist und dazu ausgelegt ist, ein zweites charakteristisches Signal zu erzeugen, wobei das zweite charakteristische Signal ein gepulstes Signal mit einer zweiten Frequenz und einem zweiten Tastverhältnis ist,
wobei ein zweiter Signaldetektor mit dem anderen des zweiten Paars von Anschlüssen verbunden ist und dazu ausgelegt ist, das zweite charakteristische Signal zu erfassen,
wobei festgestellt wird, dass das erste Paar von Anschlüssen verbunden ist, wenn der erste Signaldetektor das erste charakteristische Signal erfasst, und festgestellt wird, dass das zweite Paar von Anschlüssen verbunden ist, wenn der zweite Signaldetektor das zweite charakteristische Signal erfasst, und
wobei sich die erste Frequenz von der zweiten Frequenz und/oder das erste Tastverhältnis von dem zweiten Tastverhältnis unterscheidet.

9. Computerprogramm, das computerausführbare Anweisungen enthält, die, wenn sie von einer Computerverarbeitungsvorrichtung ausgeführt werden, dazu ausgelegt sind, die Schritte des Verfahrens nach dem vorhergehenden Anspruch durchzuführen.

## Revendications

1. Dispositif de sécurité permettant de commuter une éolienne entre un mode de fonctionnement sécurisé et un mode de fonctionnement normal, le dispositif de sécurité comprenant :
un système de commande (110, 210) comprenant une première paire de bornes (111, 112 ; 211, 212), une seconde paire de bornes (113,114 ; 213, 214), et une logique de commande, la logique de commande étant adaptée afin de générer un signal de sortie indicatif du mode de fonctionnement sécurisé ou du mode de fonctionnement normal, et
un ensemble de commutation (120, 220) pouvant fonctionner de façon à sélectionner un parmi le mode de fonctionnement normal et le mode de fonctionnement sécurisé, l'ensemble de commutation comprenant un premier commutateur (121, 221) et un second commutateur (122, 222) adaptés afin de fonctionner de manière synchrone, dans lequel le premier commutateur est adapté afin de connecter et de déconnecter sélectivement la première paire de bornes, et dans lequel le second commutateur est adapté afin de connecter et de déconnecter sélectivement la seconde paire de bornes,
dans lequel la logique de commande est adaptée afin de générer le signal de sortie indicatif du mode de fonctionnement normal lorsque la première paire de bornes et la seconde paire de bornes sont respectivement connectées, et afin de générer le signal de sortie indicatif du mode de fonctionnement sécurisé lorsqu'au moins une de la première paire de bornes et de la seconde paire de bornes n'est pas respectivement connectée,
dans lequel le système de commande comprend en outre :
un premier générateur de signal connecté à l'une de la première paire de bornes et adapté afin de générer un premier signal caractéristique, le premier signal caractéristique étant un signal pulsé doté d'une première fréquence et un premier cycle de service,
un premier détecteur de signal connecté à l'autre de la première paire de bornes et adapté afin de détecter le premier signal caractéristique,
un second générateur de signal connecté à l'une de la seconde paire de bornes et adapté afin de générer un second signal caractéristique, le second signal caractéristique étant un signal pulsé présentant une seconde fréquence et un second cycle de service, et
un second détecteur de signal connecté à l'autre de la seconde paire de bornes et adapté afin de détecter le second signal caractéristique,
dans lequel la logique de commande est adaptée afin de déterminer que la première paire de bornes est connectée quand le premier détecteur de signal détecte le premier signal caractéristique et de déterminer que la seconde paire de bornes est connectée quand le second détecteur de signal détecte le second signal caractéristique, et
dans lequel la première fréquence diffère de la seconde fréquence et/ou le premier cycle de service diffère du second cycle de service.

2. Dispositif de sécurité selon la revendication précédente, dans lequel le système de commande est un PLC de sécurité (110).

3. Dispositif de sécurité selon la revendication 1, dans lequel la logique de commande comprend un premier relais (216) et un second relais (217) agencés en série entre une source de tension et une borne de sortie (215), dans lequel le premier relais est adapté afin de fermer et le second relais est adapté afin de fermer lorsque la première paire de bornes est connectée et la seconde paire de bornes est connectée.

4. Dispositif de sécurité selon la revendication précédente, dans lequel le premier relais comprend un premier relais auxiliaire (216a) adapté afin d'indiquer l'état du premier relais, dans lequel le second relais comprend un second relais auxiliaire (217a) adapté afin d'indiquer l'état du second relais, et dans lequel le premier relais auxiliaire et le second relais auxiliaire sont connectés en série afin de former un circuit de retour (218).

5. Éolienne comprenant :
un générateur d'éolienne,
un système de commande d'éolienne, et
un dispositif de sécurité selon l'une quelconque des revendications précédentes,
dans lequel l'éolienne est couplée en communication afin de recevoir le signal de sortie du dispositif de sécurité et adaptée afin de faire fonctionner le générateur d'éolienne soit en mode de fonctionnement sécurisé, soit en mode de fonctionnement normal en fonction du signal de sortie.

6. Éolienne selon la revendication précédente, dans laquelle le système de commande d'éolienne est sensible à une entrée locale uniquement lors du fonctionnement en mode sécurisé, et dans laquelle le système de commande d'éolienne est sensible à la fois à l'entrée locale et distante lors du fonctionnement en mode de fonctionnement normal.

7. Parc éolien comprenant une pluralité d'éoliennes selon la revendication 5 ou 6.

8. Procédé de commutation d'une éolienne entre un mode de fonctionnement sécurisé et un mode de fonctionnement normal, le procédé comprenant :
la détermination si une première paire de bornes est connectée,
la détermination si une seconde paire de bornes est connectée,
la génération d'un signal de sortie indicatif du mode de fonctionnement normal lorsqu'il est déterminé que la première paire de bornes et la seconde paire de bornes sont respectivement connectées, et
la génération d'un signal de sortie indicatif du mode de fonctionnement sécurisé lorsqu'il est déterminé qu'au moins une de la première paire de bornes et de la seconde paire de bornes ne sont pas respectivement connectées,
dans lequel un premier générateur de signal est connecté à une de la première paire de bornes et adapté afin de générer un premier signal caractéristique, le premier signal caractéristique étant un signal pulsé présentant une première fréquence et un premier cycle de service,
dans lequel un premier détecteur de signal est connecté à l'autre de la première paire de bornes et adapté afin de détecter le premier signal caractéristique,
dans lequel un second générateur de signal est connecté à une de la seconde paire de bornes et adapté afin de générer un second signal caractéristique, le second signal caractéristique étant un signal pulsé présentant une seconde fréquence et un second cycle de service,
dans lequel un second détecteur de signal est connecté à l'autre de la seconde paire de bornes et adapté afin de détecter le second signal caractéristique,
dans lequel il est déterminé que la première paire de bornes est connectée quand le premier détecteur de signal détecte le premier signal caractéristique et il est déterminé que la seconde paire de bornes est connectée quand le second détecteur de signal détecte le second signal caractéristique, et
dans lequel la première fréquence diffère de la seconde fréquence et/ou le premier cycle de service diffère du second cycle de service.

9. Programme informatique comprenant des instructions exécutables sur ordinateur qui, lorsqu'elles sont exécutées par un dispositif de traitement informatique, sont adaptées afin d'effectuer les étapes du procédé selon la revendication précédente.
